Europäisches Patentamt

European Patent Office

Office européen des brevets

(11) Publication number: **0 308 988**

**A1**

(12) **EUROPEAN PATENT APPLICATION**

(21) Application number: 88115830.7

(22) Date of filing: 26.09.88

(51) Int. Cl.⁴: **B60R 25/04**

(30) Priority: **25.09.87 ZA 877235**

(43) Date of publication of application:
**29.03.89 Bulletin 89/13**

(84) Designated Contracting States:
**AT BE CH DE ES FR GB GR IT LI LU NL SE**

(71) Applicant: **Sidelsky, Michael Stewart**
**161 Ridgeway Drive Morningside Manor**
**Sandton Transvaal(ZA)**

Applicant: **Quayle, William Adair Ardiss**
**49 Witkoppen Road North Riding**
**Randburg Transvaal(ZA)**

(72) Inventor: **Quayle, William Adair Ardiss**
**49 Witkoppen Road North Riding**
**Randburg Transvaal(ZA)**

(74) Representative: **Gunschmann, Klaus, Dipl.-Ing.**
**et al**
**Patenanwälte Dipl.-Ing. H. Mitscherlich**
**Dipl.-Ing. H. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

(54) **Control module.**

(57) An alarm or immobilising control module for an internal combustion engine is potted with an electrical component such as a coil (10) of the engine so that access to the control module cannot be effected without breaking the component.

EP 0 308 988 A1

## CONTROL MODULE

### BACKGROUND TO THE INVENTION

This invention relates to control modules.

Many existing vehicle alarm and immobilising systems rely on physical concealment of wiring and control modules to be effective. This is particularly unsuited to new vehicle assembly line installation, since common knowledge of wiring and the location of control modules would not lead to the production of a vehicle which is adequately protected.

### SUMMARY OF THE INVENTION

The invention provides a device fitted with a control module which can receive control signals to enable and disable the device, in which the control module is so physically integrated with the device that access to the control module cannot be effected without breaking the device.

Preferably, the device and control module are physically integrated by being "potted" together.

In one form of the invention, the device is a component of an internal combustion engine.

In a preferred form of the invention, the external control signal is a predetermined coded signal associated with a specific control module.

### DESCRIPTION OF THE DRAWINGS

Figure 1 shows a cut-away view of a modified coil for a motor vehicle and the modifying components; and

Figure 2 shows the assembled modified coil.

### DESCRIPTION OF A PREFERRED EMBODIMENT

In Figure 1, a control module for an ignition coil 10 of a motor vehicle is in the form of a disc-shaped printed circuit board 12 which fits over the top of the coil 14. The circuit board 12 is bolted to the top of the coil 14 through the positive and negative low tension terminals 16 and 18 of the coil 10. A threaded extension post 20 is added to the negative terminal 18 of the coil 10.

The power wire 22 which would normally be connected to the positive terminal 16 is instead connected to a terminal provided on the printed circuit board itself.

A further three extension posts 24, 26 and 28 are bolted to the PC board 12. The signal extension post 24 is connected to a signal wire which supplies a control signal to the printed circuit board 12. The distributor post 26 is the low tension output terminal for the distributor. The ground post 28 is connected to any earth point on the vehicle. A specially moulded cap 30 is lowered over the top of the coil 14 and allocated holes in the cap 30 are aligned with the four extension posts 20, 24, 26 and 28. An adaptor ring 32 is slipped over the coil body 10 from below until it rests against the top lip 34 of the coil 10. The holes in the ring 36 are aligned with holes in the cap 30 and self locking screws 37 are secured to the body of the coil 10. The screws 37 are rotated until their slotted heads snap off, thus permanently securing the cap 30 to the coil 10. Finally, a silicon sealant is injected through a hole provided in the cavity housing the control module. The resistor 38 and mounting bracket 40 are then replaced.

Once the sealant sets, the unit becomes impervious to both moisture and vibration, and access to the unit is only possible by breaking it.

The signal to be applied to the control module would preferably be a coded signal delivered by a transmitter, the code being unique to or associated with that particular vehicle.

The concept of "putting" a control module together with the terminals of an ignition coil can be extended to any other vital electrical component of a motor vehicle, such as the distributor, the starter motor solenoid, the electronic ignition system, or, in the case of a diesel engine, the solonoid-operated fuel valve or heater plug.

It is thus possible to install an electrical component of a motor vehicle on the motor vehicle assembly line without fear that knowledge acquired by workmen can be used subsequently to enable theft of the vehicle.

In addition, the invention can be applied to prevent tampering with any immovable equipment, such as large motors with solenoid-actuated starters.

### Claims

1. A device fitted with a control module which can receive control signals to enable and disable the device, characterised in that the control module is so physically integrated with the device that access to the control module cannot be effected without breaking the device.

2. The device claimed in claim 1 in which the device and the control module are potted together.

3. The device claimed in either one of the above claims which is a component of an internal combustion engine.

4. The device claimed in any one of the above claims in which the control module is responsive to a predetermined coded signal associated with that control module.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 175 646 (BARROW) <br> * page 1, line 116 - page 2, line 9 * | 1-4 | B 60 R 25/04 |
| X | GB-A-2 041 599 (FAWCETT et al.) <br> * page 3, lines 80-89 * | 1-4 | |
| X | US-A-4 682 062 (WEINBERGER) <br> * figure 2; column 3, lines 45-56 * | 1-4 | |
| X | CH-A- 164 069 (GEUEKE) <br> * page 2, lines 4-19 * | 1-3 | |
| X | WO-A-8 501 708 (PHANTOM SYSTEMS) <br> * page 6, line 12 - page 7, line 3 * | 1-4 | |
| X | DE-A-3 045 345 (GRIES) <br> * claims 1,4,6 * | 1-4 | |
| X | DE-A-3 344 913 (ZIOLEK) <br> * page 4, lines 9-10 * | 1-4 | |
| X | EP-A-0 141 011 (MITSUBISHI) <br> * page 3, line 15 - page 4, line 2 * | 1-4 | TECHNICAL FIELDS SEARCHED (Int. Cl.4) <br><br> B 60 R 25/00 |
| X | US-A-4 635 605 (GOREN et al.) <br> * figure 1; column 2, lines 28-47 * | 1,3,4 | |

The present search report has been drawn up for all claims

| Place of search | Date of completion of the search | Examiner |
|---|---|---|
| BERLIN | 05-12-1988 | STANDRING M A |